# EUROPÄISCHE PATENTSCHRIFT

(11) **EP 0 521 286 B1**
(45) Veröffentlichungstag und Bekanntmachung des Hinweises auf die Patenterteilung: **06.09.1995**
(21) Anmeldenummer: 92108630.2
(22) Anmeldetag: 21.05.1992
(51) Int. Cl.: C04B 14/22, E04F 15/12, C04B 28/02

(54) **Bindemittelhaltiger Belag und Verfahren zu seiner Herstellung**
Coating with bonding agent and method of its production
Revêtement contenant un liant et méthode pour sa production

(30) Priorität: 24.06.1991 DE 4120764
(43) Veröffentlichungstag der Anmeldung: 07.01.1993
(73) Patentinhaber: Martiny, Frank, D-86922 Eresing (DE)
(72) Erfinder: Martiny, Frank, D-86922 Eresing (DE)
(74) Vertreter: Kahler, Kurt, Dipl.-Ing.

(56) Entgegenhaltungen:
- EP-A- 0 080 078
- DE-U- 9 107 753
- FR-A- 654 133
- FR-A- 997 495
- FR-A- 1 168 631
- US-A- 4 017 449
- US-A- 4 618 525
- CHEMICAL ABSTRACTS, vol. 114, no. 6, 11. Februar 1991, Columbus, Ohio, US;abstract no. 48552f, MATSUSHITA ELECTRIC WORKS LTD. Seite 348 ; & JP-A-02 199 049

## Beschreibung

Die Erfindung bezieht sich auf einen bindemittelhaltigen, an seiner Oberfläche geschliffenen Belag, bestehend aus einer Mischung von Bindemittel, Zuschlagstoffen und zusätzlichen Glaselementen als Effektelementen. Ein solcher Belag ist aus FR-A-997495 bekannt.

Bei einem betonhaltigen Belag, der unter dem Namen "Terazzo" bekannt ist, werden einer Trockenmischung aus Zement und Zuschlagstoffen farbige Steinkörnungen und Steinmehle zugegeben. Diese Mischung wird anschließend mit Wasser vermischt. Die dadurch entstandene Masse wird als Schicht auf einen Fußboden aufgetragen und nach dem Abbinden naß geschliffen, so daß eine durchgehende glatte Oberfläche entsteht. In ähnlicher Weise lassen sich auch fertig zu verlegende Fliesen herstellen.

Dieser Belag wird jedoch den heutigen Ansprüchen an einen optisch gut wirkenden Belag nicht gerecht, da er sehr wenig Transparenz aufweist. Aus diesem Grund wird er hauptsächlich nur in den Bereichen verwendet, in denen an die Attraktivität des Belags geringe Ansprüche gestellt werden, wie z.B. in Krankenhäusern.

Besser gerecht wird diesen Ansprüchen der aus Derwent Kurzreferat 87-133348/19 bekannte Belag, bei dem in hellen Zement eingebettete Glaseinstreuungen zu einer gewissen Transparenz und Tiefenwirkung führen.

Eine gleichartige Wirkung haben die Glaselemente bei dem eingangs erwähnten Belag, bei dem die Glaselemente mit einem hellfarbigen Überzug versehen sind. Der Überzug dient dabei hauptsächlich dem Zweck, ein Zusammenbacken der Glaselemente zu verhindern.

Ausgehend von diesem bekannten betonhaltigen Belag liegt nun der Erfindung die Aufgabe zugrunde, einen bindemittelhaltigen Belag mit weiter verbesserten optischen Eigenschaften zu schaffen.

Diese Aufgabe wird ausgehend von dem eingangs erwähnten bekannten Belag erfindungsgemäß dadurch gelöst, daß die Glaselemente verspiegelt sind. Mit anderen Worten, die aus Glas bestehenden Effektelemente sind mit einer reflektierenden Schicht beschichtet, die nach der Schleifbehandlung selbst nicht sichtbar bleibt, sondern das auftreffende Licht zurück durch das Glas reflektiert. Hierdurch wird nicht nur ein Glitzereffekt, sondern ein besonderer räumlicher Effekt erzielt.

Die Glaselemente bestehen vorzugsweise aus granulatförmigem Glas und/oder aus Glasscherben.

Ein besonders schöner Effekt wird erzielt, wenn die Elemente farbig oder farbig verspiegelt sind.

Hinsichtlich des räumlichen Effekts läßt sich das beste Ergebnis erzielen, wenn die Glaselemente durch Hochvakuummetallisierung verspiegelt worden sind.

Die Mischung kann zusätzlich auch Metallelemente, beispielsweise Messing oder Kupfer, enthalten, die bei Auftreffen von Licht reflektieren.

Die Räumlichkeit des Belags tritt besonders dann gut hervor, wenn die Oberfläche des Belags poliert oder glasiert ist.

Das Bindemittel kann zum Beispiel aus Beton bzw. Zement oder zum Beispiel aus Polyesterharz bestehen. Als Zuschlagstoffe werden vorzugsweise Sand, Marmor, Granit und/oder Sandstein verwendet.

Zur Herstellung des bindemittelhaltigen Belags wird eine Trockenmischung aus Bindemittel, Zuschlagstoffen und verspiegeltem Glas als zusätzliches Effektelement mit Wasser vermischt, so daß eine Art Bindemittelestrich entsteht. Anschließend wird eine Schicht aus dieser Mischung gebildet und die Oberfläche dieser Schicht nach dem Abbinden geschliffen.

Die Schicht kann als dünne Schicht auf eine dickere Bindemittelschicht auf einem Boden, vorzugsweise Betonestrich, aufgetragen werden. Dadurch läßt sich der Herstellungsaufwand verringern.

Sie kann aber auch direkt auf den Boden aufgebracht werden.

Mit diesem Verfahren lassen sich sowohl durchgehende Fußböden als auch Platten herstellen, die zu einem Fußboden verlegt werden. Der erfindungsgemäße Belag kann aber auch als Auflage für Waschbecken, Badewannen, Säulen, etc. verwendet werden.

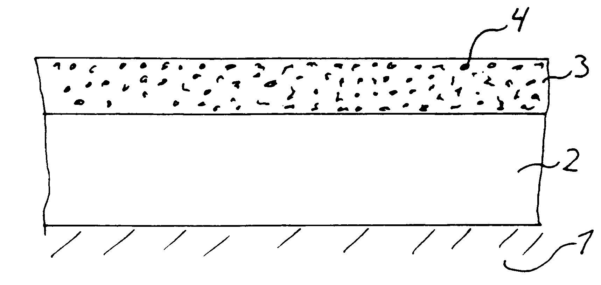

Ein Ausführungsbeispiel des erfindungsgemäßen Belags wird nachstehend anhand der Zeichnung, die einen bindemittelhaltigen Belag im Querschnitt zeigt, näher erläutert.

Auf einen Fußboden 1 ist eine Schicht 2 aus Bindemittelestrich auf bekannte Weise aufgetragen. Auf diese Schicht 2 ist eine weitere bindemittelhaltige Belagschicht 3 aufgebracht, die aus einer Mischung aus 20 bis 40 % Bindemittel, 20 bis 40 % Zuschlagstoffen und 20 bis 60 % granulatförmigen Glases 4 besteht, das durch Hochvakuummetallisierung verspiegelt worden ist. Die Oberfläche der Belagschicht 3 ist nach dem Abbinden geschliffen und anschließend poliert worden, um eine gute Transparenz und Räumlichkeit zu erhalten.

## Patentansprüche

1. Bindemittelhaltiger, an seiner Oberfläche geschliffener Belag bestehend aus einer Mischung von Bindemittel, Zuschlagstoffen und mit zusätzlichen Glaselementen (4) als Effektelementen, dadurch gekennzeichnet, daß die Glaselemente verspiegelt sind.

2. Belag nach Anspruch 1, dadurch gekennzeichnet, daß die Glaselemente (4) aus granulatförmigem Glas und/oder aus Glasscherben bestehen.

3. Belag nach Anspruch 1 oder 2, dadurch gekennzeichnet, daß die Glaselemente (4) farbig oder farbig verspiegelt sind.

4. Belag nach einem der Ansprüche 1 bis 3, dadurch gekennzeichnet, daß die Glaselemente (4) durch Hochvakuummetallisierung verspiegelt sind.

5. Belag nach einem der vorhergehenden Ansprüche, dadurch gekennzeichnet, daß die Mischung Metallelemente enthält.

6. Belag nach einem der vorhergehenden Ansprüche, dadurch gekennzeichnet, daß seine Oberfläche poliert ist.

7. Belag nach einem der Ansprüche 1 bis 6, gekennzeichnet durch eine glasierte Oberfläche.

8. Verfahren zur Herstellung eines bindemittelhaltigen Belags, bei dem eine Trockenmischung aus Bindemittel, Zuschlagstoffen und verspiegelten Glaselementen (4) mit Wasser vermischt, eine Belagschicht aus der Mischung gebildet und die Oberfläche der Belagschich geschliffen wird.

9. Verfahren nach Anspruch 8, dadurch gekennzeichnet, daß der Trockenmischung Metallelemente zugegeben werden.

10. Verfahren nach Anspruch 8 oder 9, dadurch gekennzeichnet, daß die Oberfläche der Belagschicht nach dem Abbinden geschliffen und anschließend poliert wird.

11. Verfahren nach einem der Ansprüche 8 oder 9, dadurch gekennzeichnet, daß die Oberfläche der Belagschicht glasiert wird.

12. Verfahren nach einem der Ansprüche 8 bis 11, dadurch gekennzeichnet, daß die Belagschicht auf eine Bindemittelschicht aufgetragen wird.

## Claims

1. Covering containing a binder and having a grinded surface, said covering consisting of a mixture of a binder, aggregates and additional glass elements (4) as effect elements, characterized in that the glass elements (4) are mirror-coated.

2. Covering according to claim 1, characterized in that the glass elements (4) are consisting of granulate glass and/or cullets.

3. Covering according to claim 1 or 2, characterized in that the glass elements (4) are colored or have a colored mirror-coating.

4. Covering according to any of the claims 1 to 3, characterized in that the glass elements (4) are mirror-coated by high-vacuum metallizing.

5. Covering according to any of the preceding claims, characterized in that the mixture contains metal elements.

6. Covering according to any of the preceding claims, characterized in that the surface of which is polished.

7. Covering according to any of the claims 1 to 6, characterized by a glazed surface.

8. Process for manufacturing a binder containing covering, in which a dry mixture of binder, aggregates and mirror-coated glass elements (4) is mixed with water, a cover layer is formed of the mixture and the surface of the cover layer is grinded.

9. Process according to claim 8, characterized in that metal elements are added into the dry mixture.

10. Process according to claim 8 or 9, characterized in that upon binding the surface of the cover layer is grinded and subsequently polished.

11. Process according to any of the claims 8 or 9, characterized in that the surface of the cover layer is glazed.

12. Process according to any of the claims 8 to 11, characterized in that the cover layer is applied on a binder layer.

## Revendications

1. Revêtement contenant un liant et meulé à sa surface, composé d'un mélange de liant, de granulats et d'éléments de verte supplémentaires (4) servant d'éléments fantaisie, caractérisé en ce que les éléments de verte portent un tain.

2. Revêtement selon la revendication 1, caractérisé en ce que les éléments de verte (4) sont composés de verte sous la forme de granulats et/ou de débris de verte.

3. Revêtement selon la revendication 1 ou 2, caractérisé en ce que les éléments de verte (4) sont colorés ou leur tain est coloré.

4. Revêtement selon l'une des revendications 1 à 3, caractérisé en ce que le tain est appliqué sur les éléments de verte (4) par métallisation sous vide poussé.

5. Revêtement selon l'une des revendications précédentes, caractérisé en ce que le mélange contient des éléments de métal.

6. Revêtement selon l'une des revendications précédentes, caractérisé en ce que sa surface est polie.

7. Revêtement selon l'une des revendications 1 à 6, caractérisé par une surface vitrifiée.

8. Procédé pour fabriquer un revêtement contenant un liant, selon lequel un mélange sec de liant, de granulats et d'éléments de verte (4) munis d'un tain est mélangé à de l'eau, une couche de revêtement est formée à partir du mélange et la surface de la couche de revêtement est meulée.

9. Procédé selon la revendication 8, caractérisé en ce que des éléments de métal sont ajoutés au mélange sec.

10. Procédé selon la revendication 8 ou 9, caractérisé en ce que la surface de la couche de revêtement est meulée après que le mélange a pris, puis polie.

11. Procédé selon l'une des revendications 8 ou 9, caractérisé en ce que la surface de la couche de revêtement est vitrifiée.

12. Procédé selon l'une des revendications 8 à 11, caractérisé en ce que la couche de revêtement est appliquée sur une couche de liant.
